# FASCICULE DE BREVET EUROPEEN

(11) **EP 4 004 443 B1**
(45) Date de publication et mention de la délivrance du brevet: **30.08.2023**
(21) Numéro de dépôt: 20756920.3
(22) Date de dépôt: 27.07.2020
(51) Int. Cl.: F23R 3/34, F23R 3/50

(54) **CHAMBRE DE COMBUSTION COMPORTANT DES SYSTÈMES D'INJECTION SECONDAIRES ET PROCÉDÉ D'ALIMENTATION EN CARBURANT**
BRENNKAMMER MIT SEKUNDÄREINSPRITZSYSTEMEN UND VERFAHREN ZUR KRAFTSTOFFVERSORGUNG
COMBUSTION CHAMBER COMPRISING SECONDARY INJECTION SYSTEMS, AND FUEL SUPPLY METHOD

(30) Priorité: 29.07.2019 FR 1908618
(43) Date de publication de la demande: 01.06.2022
(73) Titulaire: SAFRAN AIRCRAFT ENGINES, 75015 Paris (FR)
(72) Inventeur: LEPAROUX, Julien, Marc, Matthieu, 77550 MOISSY-CRAMAYEL (FR); CABRE, Jean-François, 77550 MOISSY-CRAMAYEL (FR); MUSAEFENDIC, Haris, 77550 MOISSY-CRAMAYEL (FR); LUNEL, Romain, Nicolas, 77550 MOISSY-CRAMAYEL (FR)
(74) Mandataire: Brevalex
(86) Numéro de dépôt international: PCT/FR2020/051369
(87) Numéro de publication internationale: WO 2021/019172

(56) Documents cités:
- CN-A- 104 566 460
- FR-A1- 2 951 245
- US-A- 5 885 068
- US-A1- 2014 272 736
- US-A1- 2017 023 251

## Description

### DOMAINE TECHNIQUE

La présente invention se rapporte au domaine des turbomachines pour aéronef et concerne plus particulièrement une chambre de combustion équipée de systèmes d'injection générant un écoulement rotationnel de mélange d'air et de carburant formant une zone de recirculation centrale et une zone de recirculation de coin.

L'invention concerne également une turbomachine comprenant une telle chambre de combustion, ainsi qu'un procédé d'alimentation en carburant d'une telle chambre de combustion.

### ÉTAT DE LA TECHNIQUE ANTÉRIEURE

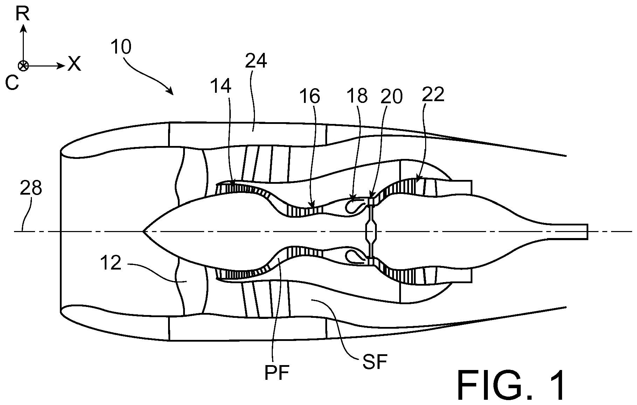

La figure 1 annexée illustre une turbomachine 10 pour aéronef, par exemple un turboréacteur à double flux, comportant de manière générale une soufflante 12 destinée à l'aspiration d'un flux d'air se divisant en aval de la soufflante en un flux primaire PF alimentant un coeur de la turbomachine et un flux secondaire SF contournant ce coeur. Le coeur de la turbomachine comporte, de manière générale, un compresseur basse pression 14, un compresseur haute pression 16, une chambre de combustion 18, une turbine haute pression 20 et une turbine basse pression 22. La turbomachine est carénée par une nacelle 24 entourant l'espace d'écoulement du flux secondaire SF. Les rotors de la turbomachine sont montés rotatifs autour d'un axe longitudinal 28 de la turbomachine.

Dans l'ensemble de cette description, sauf lorsqu'il en est stipulé autrement, la direction axiale X est la direction de l'axe longitudinal 28, la direction radiale R est en tout point une direction orthogonale à l'axe longitudinal 28 et passant par ce dernier, et la direction circonférentielle ou tangentielle C est en tout point une direction orthogonale à la direction radiale R et à l'axe longitudinal 28. Les termes « radialement interne » et « radialement externe » font respectivement référence à une relative proximité, et un relatif éloignement, d'un élément par rapport à l'axe longitudinal 28. Enfin, les directions « amont » et « aval » sont définies par référence à la direction générale de l'écoulement des gaz dans les veines primaire PF et secondaire SF de la turbomachine, selon la direction axiale X.

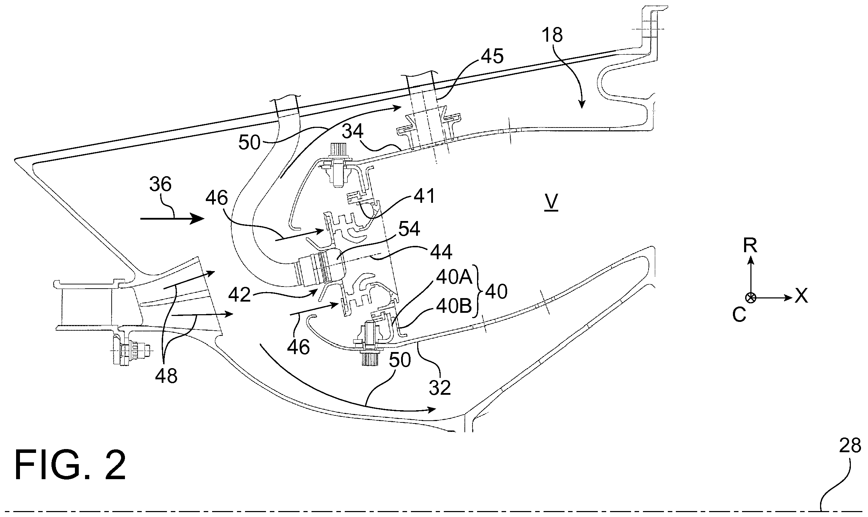

La figure 2 représente la chambre de combustion 18, dans une configuration connue. De manière classique, cette chambre de combustion, qui est de type annulaire, comprend deux parois annulaires coaxiales, respectivement radialement interne 32 et radialement externe 34, qui s'étendent de l'amont vers l'aval, selon le sens 36 d'écoulement du flux primaire de gaz dans la turbomachine, autour de l'axe de la chambre de combustion qui se confond avec l'axe longitudinal 28 de la turbomachine. Ces parois annulaires radialement interne 32 et radialement externe 34 sont reliées entre elles à leur extrémité amont par une structure annulaire de fond de chambre 40, de sorte que la structure annulaire de fond de chambre 40 et les deux parois annulaires coaxiales 32, 34 délimitent extérieurement un volume intérieur V de la chambre de combustion. La structure annulaire de fond de chambre 40 est typiquement formée d'une paroi annulaire de fond de chambre 40A et d'un bouclier annulaire 40B, également dénommé déflecteur, s'étendant en regard de la paroi annulaire de fond de chambre 40A du côté de l'intérieur de la chambre de combustion, d'une manière bien connue.

La structure annulaire de fond de chambre 40, qui peut être sectorisée ou non, comporte des passages 41, répartis en une rangée annulaire autour de l'axe longitudinal 28, et au travers desquels sont respectivement montés des systèmes d'injection 42 configurés pour délivrer chacun une nappe d'un mélange d'air et de carburant centrée selon un axe d'injection 44 respectif.

De plus, la chambre de combustion est en général équipée d'une ou plusieurs bougies d'allumage 45 montées au travers de la paroi annulaire externe 34.

En fonctionnement, une partie 46 d'un flux d'air 48 provenant du compresseur haute pression 16 alimente les systèmes d'injection 42 tandis qu'une autre partie 50 de ce flux d'air contourne la chambre de combustion en s'écoulant vers l'aval le long des parois coaxiales 32 et 34 de cette chambre et permet notamment l'alimentation d'orifices d'entrée d'air prévus au sein de ces parois 32 et 34, pour permettre un fonctionnement étagé de type ROL (« *Rich-Quench-Lean* »)*.*

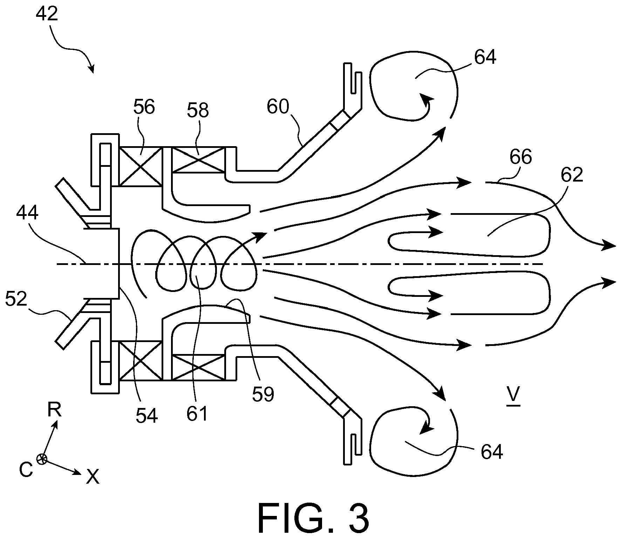

Comme le montre la figure 3, chaque système d'injection 42 comporte de manière générale une douille 52, parfois dénommée « traversée coulissante », dans laquelle un nez d'injection de carburant 54 est monté, ainsi qu'une ou plusieurs vrilles d'entrée d'air 56, 58, éventuellement séparées l'une de l'autre par une paroi 59 à extrémité radialement interne de forme convergente-divergente, couramment dénommée « venturi », et enfin un bol 60, parfois dénommé « bol mélangeur », qui prend essentiellement la forme d'une paroi de révolution ayant une forme qui diverge vers l'aval. Ces éléments sont centrés par rapport à l'axe d'injection 44.

En fonctionnement, l'air entrant par la ou les vrilles d'entrée d'air 56, 58 se mélange au carburant issu du nez d'injection de carburant 54 en formant un écoulement rotationnel 61, parfois dénommé « écoulement swirlé », qui donne naissance à deux types de zones de recirculation dans le volume intérieur V : une zone de recirculation centrale 62 et une zone de recirculation de coin 64, cette dernière s'étendant autour de la zone de recirculation centrale. La référence 66 désigne la limite de la zone de recirculation centrale 62, qui se referme vers l'aval.

La technologie actuelle d'injection repose sur l'utilisation de nez d'injection de carburant 54 de type aérodynamique ou aéromécanique, configurés pour pulvériser le carburant vers les zones de recirculation centrales 62 afin de stabiliser la flamme de combustion.

En fonctionnement normal, la stabilité de la chambre de combustion se caractérise par sa capacité à rester allumée lorsque l'alimentation en air ou en carburant varie. L'extinction de la chambre de combustion peut avoir lieu à tout moment, dès lors que son fonctionnement sort des limites de stabilité. De telles conditions se rencontrent principalement lorsque la turbomachine fonctionne à bas régime, en particulier au régime de ralenti et aux régimes inférieurs au régime de ralenti. Or, les inventeurs ont déterminé que la stabilisation de la flamme à bas régime repose en premier lieu sur une bonne carburation dans les zones de recirculation de coin.

De plus, en cas de redémarrage en vol, les conditions thermiques du moteur à l'arrêt font qu'il est difficile de créer un noyau d'énergie et de le propager afin d'obtenir une combustion auto-entretenue, d'autant que la pression dans la chambre de combustion est inférieure à la pression atmosphérique. La faible pression diminue l'énergie contenue dans l'écoulement d'air et nécessaire pour atomiser le carburant sous forme liquide et produire un spray contenant des gouttes suffisamment petites pour allumer la chambre. La faible température réduit en outre l'évaporation des gouttes formant le spray, pourtant souhaitable.

Suivant les dimensions de la chambre et la position de la bougie d'allumage, il arrive que dans certaines conditions de fonctionnement le noyau d'énergie au voisinage de la bougie ne soit pas capté par la zone de recirculation centrale et que le processus d'allumage échoue. Une autre cause possible d'échec peut être une concentration insuffisante en carburant au voisinage de la bougie pour l'obtention d'un noyau d'énergie.

Par ailleurs, pour les chambres de combustion basées sur la technologie RQL (« *Rich-Quench-Lean* »), la totalité du combustible introduit dans la chambre de combustion provient des systèmes d'injection montés dans la structure annulaire de fond de chambre. Par conséquent, la combustion et le champ de température ne sont pas uniformes dans la chambre de combustion. Cette hétérogénéité favorise l'émission de composés polluants.

Le document US20170023251 de la demanderesse propose de résoudre ou au moins d'atténuer ces problèmes au moyen de nez d'injection de carburant secondaires configurés pour injecter du carburant directement dans les zones de coin lorsque la turbomachine fonctionne à bas régime.

### EXPOSÉ DE L'INVENTION

La présente invention a notamment pour but d'optimiser la mise en oeuvre du principe général présenté dans le document US20170023251 précité.

Elle propose à cet effet une chambre de combustion pour turbomachine d'aéronef, comprenant :
- une structure annulaire de fond de chambre, et deux parois annulaires coaxiales reliées entre elles par la structure annulaire de fond de chambre et centrées par rapport à un axe longitudinal de la chambre de combustion, de sorte que la structure annulaire de fond de chambre et les deux parois annulaires coaxiales délimitent un volume intérieur de la chambre de combustion ;
- des passages principaux formés au travers de la structure annulaire de fond de chambre ; et
- une rangée annulaire de systèmes d'injection principaux montés respectivement dans les passages principaux, chaque système d'injection principal comprenant un nez d'injection de carburant principal respectif définissant un axe d'injection respectif, et au moins une vrille d'entrée d'air respective, pour délivrer, dans le volume intérieur de la chambre de combustion, une nappe respective d'un mélange air/carburant, centrée sur l'axe d'injection respectif et comprenant une zone de recirculation centrale respective, et une zone de recirculation de coin respective s'étendant annulairement autour de la zone de recirculation centrale respective.
- des systèmes d'injection secondaires configurés chacun pour injecter un flux additionnel d'air et de carburant directement dans la zone de recirculation de coin respective de la nappe du mélange air-carburant délivrée par un système d'injection principal correspondant, chaque système d'injection secondaire comprenant au moins un dispositif d'injection secondaire configuré pour fournir une partie au moins du carburant du flux additionnel d'air et de carburant correspondant et une partie au moins de l'air du flux additionnel d'air et de carburant correspondant, au travers d'une région d'injection secondaire correspondante de la structure annulaire de fond de chambre séparée du passage principal au travers duquel est monté le système d'injection principal correspondant.

D'une manière générale, l'injection de carburant et d'air dans les zones de recirculation de coin au moyen des systèmes d'injection secondaires permet d'améliorer la carburation dans ces zones, et donc d'abaisser la limite d'extinction de la chambre de combustion, c'est-à-dire le régime de fonctionnement minimal en dessous duquel la chambre de combustion s'éteint, et de faciliter le rallumage en vol de la chambre de combustion.

L'invention permet également d'améliorer l'homogénéité de la zone de combustion dans le volume intérieur de la chambre de combustion, et donc de réduire les émissions de composés polluants, en particulier le monoxyde de carbone.

Selon l'invention, chaque dispositif d'injection secondaire comporte un nez d'injection de carburant secondaire respectif, monté dans un passage secondaire correspondant formé au travers de la région d'injection secondaire correspondante, dans la structure annulaire de fond de chambre, pour fournir ladite partie au moins du carburant du flux additionnel d'air et de carburant correspondant, et un ensemble annulaire respectif d'orifices d'entrée d'air formés dans la région d'injection secondaire correspondante dans la structure annulaire de fond de chambre, répartis autour dudit passage secondaire correspondant, et débouchant dans le volume intérieur de la chambre de combustion, de manière à fournir ladite partie au moins de l'air du flux additionnel d'air et de carburant correspondant.

De préférence, chaque dispositif d'injection secondaire comporte en outre une surface annulaire divergente respective, formée dans la structure annulaire de fond de chambre de manière à délimiter une sortie du passage secondaire correspondant, et présentant une forme divergente en direction du volume intérieur de la chambre de combustion.

De préférence, l'ensemble annulaire respectif d'orifices d'entrée d'air de chaque dispositif d'injection secondaire comporte des premiers orifices d'entrée d'air formés dans la surface annulaire divergente respective du dispositif d'injection secondaire.

De préférence, l'ensemble annulaire respectif d'orifices d'entrée d'air de chaque dispositif d'injection secondaire comporte des seconds orifices d'entrée d'air agencés autour de la surface annulaire divergente respective du dispositif d'injection secondaire.

De préférence, l'ensemble annulaire d'orifices d'entrée d'air de chaque dispositif d'injection secondaire est configuré pour conférer un caractère tourbillonnant à l'air passant au travers dudit ensemble annulaire d'orifices d'entrée d'air.

De préférence, la structure annulaire de fond de chambre comporte une paroi annulaire de fond de chambre agencée d'un côté extérieur de la chambre de combustion et reliant l'une à l'autre les deux parois annulaires coaxiales, et un bouclier annulaire agencé d'un côté intérieur de la chambre de combustion en regard de la paroi annulaire de fond de chambre.

De préférence, chaque passage secondaire est formé d'un orifice secondaire respectif formé dans le bouclier annulaire, et d'une ouverture secondaire respective formée dans la paroi annulaire de fond de chambre, en regard de l'orifice secondaire respectif.

De préférence, l'ensemble annulaire respectif d'orifices d'entrée d'air de chaque dispositif d'injection secondaire est formé dans le bouclier annulaire, autour de l'orifice secondaire respectif du dispositif d'injection secondaire.

L'invention concerne également une turbomachine, comprenant une chambre de combustion du type décrit ci-dessus, et un système secondaire d'alimentation en carburant configuré pour alimenter les systèmes d'injection secondaires en carburant lorsque la turbomachine fonctionne à un régime de fonctionnement inférieur ou égal à un régime prédéterminé, et pour stopper l'alimentation en carburant des systèmes d'injection secondaires lorsque la turbomachine fonctionne à un régime de fonctionnement supérieur au régime prédéterminé.

De préférence, le régime prédéterminé est le régime de ralenti.

De préférence, la turbomachine comprend en outre un système principal d'alimentation en carburant comprenant des cannes principales à l'extrémité desquelles sont respectivement agencés les nez d'injection de carburant principaux respectifs des systèmes d'injection principaux, et dans laquelle le système secondaire d'alimentation en carburant comprend des cannes secondaires à l'extrémité desquelles sont respectivement raccordés les dispositif d'injection secondaire, les cannes secondaires étant raccordées chacune à une canne principale correspondante.

De préférence, chaque canne secondaire comporte une portion proximale s'étendant transversalement à l'axe d'injection défini par le nez d'injection de carburant principal correspondant.

L'invention concerne aussi un procédé d'alimentation en carburant d'une chambre de combustion du type décrit ci-dessus dans une turbomachine, qui comprend la fourniture de carburant aux systèmes d'injection secondaires lorsque la turbomachine fonctionne à un régime inférieur ou égal à un régime prédéterminé, de sorte que les systèmes d'injection secondaires injectent le flux additionnel d'air et de carburant directement dans les zones de recirculation de coin respectives des nappes du mélange air/carburant respectivement délivrées par les systèmes d'injection principaux de la chambre de combustion.

De préférence, le procédé comprend en outre l'arrêt de la fourniture de carburant aux systèmes d'injection secondaires lorsque la turbomachine fonctionne à un régime supérieur au régime prédéterminé.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1, déjà décrite, est une vue schématique partielle en coupe axiale d'une turbomachine ;
- la figure 2, déjà décrite, est une vue schématique partielle en coupe axiale d'une chambre de combustion selon une configuration connue, au sein de la turbomachine de la figure 1 ;
- la figure 3, déjà décrite, est une vue schématique partielle en coupe axiale d'un système d'injection équipant la chambre de combustion de la figure 2 ;
- la figure 4 est une vue schématique partielle en perspective, depuis l'amont, d'une structure annulaire de fond de chambre et de systèmes principal et secondaire d'alimentation en carburant d'une chambre de combustion selon un mode de réalisation préféré de l'invention, au sein d'une turbomachine telle que celle de la figure 1 ;
- la figure 5 est une vue semblable à la figure 4, sans les systèmes principal et secondaire d'alimentation en carburant ;
- la figure 6 est une vue à plus grande échelle d'une partie de la figure 5 ;
- la figure 7 est une vue semblable à la figure 5, depuis l'aval ;
- la figure 8 est une vue à plus grande échelle d'une partie de la figure 7 ;
- les figures 9 à 11 sont des vues schématiques partielles de face, depuis l'amont, de chambres de combustion et de systèmes principaux et secondaires d'alimentation en carburant, respectivement selon d'autres modes de réalisation de l'invention.

Dans l'ensemble de ces figures, des références identiques peuvent désigner des éléments identiques ou analogues.

### EXPOSÉ DÉTAILLÉ DE MODES DE RÉALISATION PRÉFÉRÉS

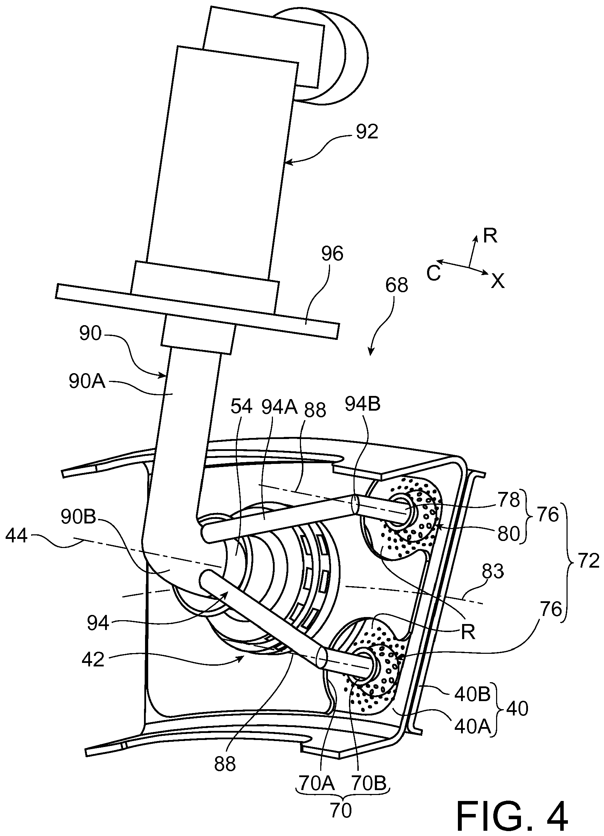

Les figures 4 à 8 illustrent partiellement une chambre de combustion 68 d'une turbomachine selon un mode de réalisation préféré de l'invention. Cette chambre de combustion 68 est globalement semblable à la chambre de combustion 18 des figures 2 et 3, de sorte que les caractéristiques communes à ces deux chambres de combustion ne seront pas répétées dans ce qui suit.

Les figures 4 à 8 montrent plus particulièrement un secteur angulaire de la structure annulaire de fond de chambre 40 de la chambre de combustion 68.

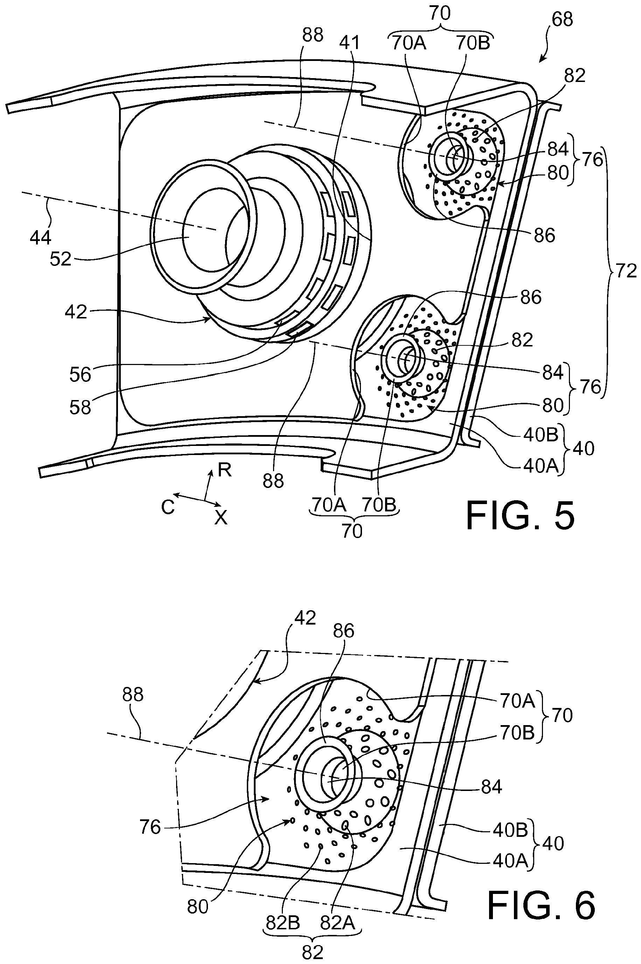

Les figures 4 et 5 permettent ainsi d'apercevoir l'un des systèmes d'injection 42, qui sont dénommés « systèmes d'injection principaux » dans ce qui suit. De manière analogue, les passages 41 (figure 5) formés au travers de la structure annulaire de fond de chambre 40 et dans lesquels les systèmes d'injection principaux 42 sont montés sont dénommés « passages principaux ». Les systèmes d'injection principaux 42 peuvent être du type aéromécanique ou aérodynamique.

De plus, la chambre de combustion 68 comprend des systèmes d'injection secondaires 72 (figures 4-8) configurés chacun pour injecter un flux additionnel d'air et de carburant directement dans une zone de recirculation de coin 64 respective de la nappe du mélange air-carburant délivrée par un système d'injection principal 42 correspondant. Autrement dit, chaque zone de recirculation de coin 64 reçoit directement un flux additionnel correspondant d'air et de carburant, issu d'un système d'injection secondaire 72 correspondant.

À cet effet, chaque système d'injection secondaire 72 comprend un ou plusieurs dispositifs d'injection secondaire 76, par exemple au nombre de deux.

Chaque dispositif d'injection secondaire 76 est configuré pour fournir une partie au moins du carburant du flux additionnel d'air et de carburant correspondant et une partie au moins de l'air du flux additionnel d'air et de carburant correspondant, au travers d'une région d'injection secondaire correspondante R de la structure annulaire de fond de chambre 40. Ladite région d'injection secondaire correspondante R est séparée de tout passage principal 41, et est en particulier séparée du passage principal 41 au travers duquel est monté le système d'injection principal 42 correspondant.

À cet effet, chaque dispositif d'injection secondaire 76 comporte un nez d'injection de carburant secondaire 78 respectif monté dans un passage secondaire 70 correspondant formé au travers de la région d'injection secondaire R correspondante, dans la structure annulaire de fond de chambre 40, de manière à injecter ladite partie du carburant du flux additionnel d'air et de carburant correspondant, directement dans la zone de recirculation de coin 64 correspondante.

De plus, chaque dispositif d'injection secondaire 76 comporte un ensemble annulaire 80 respectif d'orifices d'entrée d'air 82 formés dans la structure annulaire de fond de chambre 40. Ces orifices d'entrée d'air 82 sont agencés dans la région d'injection secondaire R correspondante en étant répartis autour du passage secondaire 70 correspondant, et ces orifices d'entrée d'air 82 débouchent dans le volume intérieur V de la chambre de combustion 68.

L'expression « injecter du carburant directement dans la zone de recirculation de coin » vise à spécifier que le carburant issu de chaque nez d'injection de carburant secondaire 78 atteint la zone de recirculation de coin 64 correspondante sans passer par d'autres parties de la nappe de mélange air/carburant issue du système d'injection principal 42 correspondant, en particulier sans passer par la zone de recirculation centrale 62 de cette nappe, et sans passer par l'intérieur du système d'injection principal 42 correspondant. À cet effet, chaque dispositif d'injection secondaire 76 débouche axialement en regard de la zone de recirculation de coin 64 correspondante, selon la direction de l'axe d'injection 44 correspondant.

Dans le mode de réalisation illustré, la structure annulaire de fond de chambre 40 étant formée d'une paroi annulaire de fond de chambre 40A et d'un bouclier annulaire 40B comme expliqué ci-dessus, chaque passage secondaire 70 est formé d'un orifice secondaire 70B respectif formé dans le bouclier annulaire 40B, et d'une ouverture secondaire 70A respective formée dans la paroi annulaire de fond de chambre 40A, en regard de l'orifice secondaire respectif 70B.

De plus, l'ensemble annulaire 80 respectif d'orifices d'entrée d'air 82 de chaque dispositif d'injection secondaire 76 est formé dans le bouclier annulaire 40B, autour de l'orifice secondaire 70B respectif du dispositif d'injection secondaire 76.

Afin de faciliter l'alimentation en air des orifices d'entrée d'air 82 correspondants, chaque ouverture secondaire 70A présente un diamètre plus grand que celui de l'orifice secondaire 70B correspondant.

Les orifices d'entrée d'air 82 présentent de préférence un diamètre compris entre 0,3 mm et 0,6 mm (inclus).

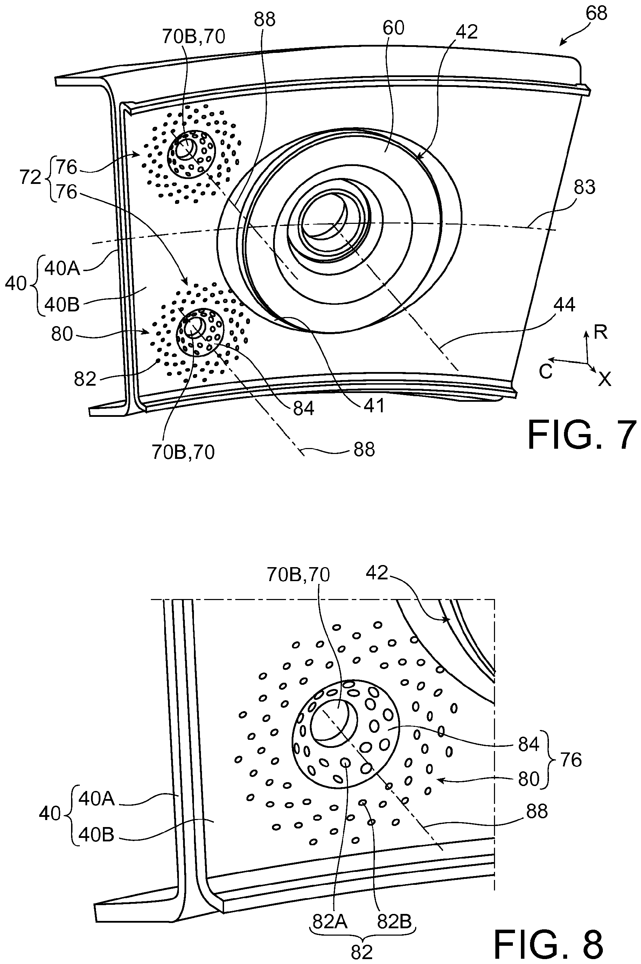

Dans le mode de réalisation illustré sur les figures 4 à 8, chaque système d'injection secondaire 72 comporte deux dispositifs d'injection secondaires 76, agencés d'un même côté par rapport au système d'injection principal 42 correspondant (c'est-à-dire le système d'injection principal délivrant la nappe de mélange air/carburant formant la zone de recirculation de coin 64 dans laquelle les nez d'injection de carburant secondaires 78 respectifs des deux dispositifs d'injection secondaires 76 injectent du carburant). De plus, les deux dispositifs d'injection secondaires 76 de chaque système d'injection secondaire 72 sont agencés respectivement radialement vers l'extérieur et radialement vers l'intérieur par rapport au système d'injection principal 42 correspondant. Ainsi, les deux dispositifs d'injection secondaires 76 de chaque système d'injection secondaire 72 sont par exemple agencés respectivement radialement vers l'extérieur et radialement vers l'intérieur par rapport à un cercle 83 centré sur l'axe longitudinal 28 de la turbomachine et passant par les axes d'injection 44 respectifs des systèmes d'injection principaux 42 (figures 4 et 7).

Chaque dispositif d'injection secondaire 76 comporte en outre une surface annulaire divergente 84 respective formée dans la structure annulaire de fond de chambre 40 (figures 5-8), de manière à délimiter une sortie du passage secondaire 70 correspondant, et présentant une forme divergente en direction du volume intérieur V de la chambre de combustion.

Plus précisément, dans le mode de réalisation illustré, la surface annulaire divergente 84 respective de chaque dispositif d'injection secondaire 76 forme un tronçon aval de la surface intérieure d'une cheminée 86 respective (figures 5 et 6), faisant saillie vers l'amont depuis le bouclier annulaire 40B, et délimitant l'orifice secondaire 70B correspondant.

Dans l'exemple illustré sur les figures 4-8, l'ensemble annulaire 80 respectif d'orifices d'entrée d'air 82 de chaque dispositif d'injection secondaire 76 comporte des premiers orifices d'entrée d'air 82A formés dans la surface annulaire divergente 84 respective du dispositif d'injection secondaire 76, et des seconds orifices d'entrée d'air 82B agencés autour de la surface annulaire divergente 84 respective du dispositif d'injection secondaire 76.

Par ailleurs, les orifices d'entrée d'air 82 de chaque ensemble annulaire 80 sont conformés pour conférer un caractère tourbillonnant à l'air traversant ces orifices. Autrement dit, les orifices d'entrée d'air 82 de chaque ensemble annulaire 80 présentent des axes respectifs orientés de manière à faire tourner l'air passant au travers de ces orifices, autour d'un axe secondaire d'injection 88 respectif (figures 6-8) défini par le nez d'injection secondaire 76 correspondant et se confondant avec l'axe de révolution de la surface annulaire divergente 84 correspondante.

Les premiers orifices d'entrée d'air 82A, d'une part, et les seconds orifices d'entrée d'air 82B, d'autre part, peuvent être orientés dans le même sens pour former conjointement un écoulement co-rotatif, ou au contraire, être orientés dans des sens contraires de manière à former conjointement un écoulement contrarotatif.

Par ailleurs, les nez d'injection secondaires 76 et les surfaces annulaires divergentes 84 correspondantes sont de préférence configurés de sorte que les axes secondaires d'injection 88 correspondants soient orientés parallèlement à l'axe d'injection 44 défini par le système d'injection principal 42 correspondant.

En référence à la figure 4, l'alimentation en carburant des systèmes d'injection principaux 42 est assurée au moyen d'un système principal d'alimentation en carburant, qui peut être d'un type conventionnel. Ce système comprend notamment des cannes principales 90 à l'extrémité desquelles sont respectivement agencés les nez d'injection de carburant principaux 54. Ce système comprend également un circuit d'alimentation en carburant (non visible sur les figures) pourvu de moyens de régulation du débit de carburant, qui prennent par exemple la forme d'une pluralité de dispositifs de régulation 92 auxquels sont respectivement raccordées les cannes principales 90.

Plus précisément, chaque canne principale 90 comporte par exemple une portion proximale 90A qui s'étend radialement vers l'intérieur à partir d'une plateforme 96 destinée à être fixée à un carter externe, et qui débouche dans une portion coudée 90B qui débouche elle-même dans une portion distale de la canne principale s'étendant selon l'axe d'injection 44 correspondant et formant le nez d'injection principal 54 correspondant.

L'alimentation en carburant des systèmes d'injection secondaires 72 est assurée au moyen d'un système secondaire d'alimentation en carburant, configuré pour alimenter les systèmes d'injection secondaires 72 en carburant lorsque la turbomachine fonctionne à un régime de fonctionnement inférieur ou égal à un régime prédéterminé, et, de préférence, pour stopper l'alimentation en carburant des systèmes d'injection secondaires 72 lorsque la turbomachine fonctionne à un régime de fonctionnement supérieur au régime prédéterminé.

Le régime prédéterminé est avantageusement le régime de ralenti. L'alimentation en carburant des systèmes d'injection secondaires 72 est ainsi opérée dans les conditions de fonctionnement auxquelles la chambre de combustion présente un risque d'extinction, ainsi que lors de l'allumage de la chambre de combustion.

Dans le mode de réalisation illustré, le système secondaire d'alimentation en carburant comprend des cannes secondaires 94 à l'extrémité desquelles sont respectivement agencés les nez d'injection de carburant secondaires 78.

Ces cannes secondaires 94 sont par exemple raccordées chacune à une canne principale 90 correspondante.

De préférence, chaque canne secondaire 94 s'étend transversalement à l'axe d'injection 44 défini par le nez d'injection de carburant principal 54 correspondant, à partir de la canne principale 90 correspondante.

Chaque canne secondaire 94 comporte ainsi une portion proximale 94A qui s'étend transversalement à l'axe d'injection 44, par exemple à partir de la portion coudée 90B, et qui débouche dans une portion coudée 94B qui se prolonge en une portion distale sensiblement parallèle à l'axe d'injection 44 correspondant et formant le nez d'injection de carburant secondaire 78 correspondant.

Dans l'exemple illustré dans lequel chaque système d'injection secondaire 72 comporte deux dispositifs d'injection secondaires 76 agencés de la manière expliquée ci-dessus, les portions proximales 94A respectives des cannes secondaires 94 s'étendent selon des directions inclinées par rapport à une direction tangente au cercle 83 au niveau de l'axe d'injection 44, respectivement radialement vers l'extérieur et radialement vers l'intérieur par rapport à l'axe d'injection 44, en s'éloignant de l'axe d'injection 44.

En fonctionnement, du carburant est fourni aux systèmes d'injection principaux 42 par le système principal d'alimentation en carburant, d'une manière conventionnelle.

Par exemple, dans le cas où les nez d'injection de carburant principaux 54 sont du type à double circuit, c'est-à-dire comprenant un injecteur pilote entouré par un injecteur principal, l'injecteur pilote est alimenté en carburant au ralenti et à bas régime, et éventuellement aux autres régimes de fonctionnement de la turbomachine, tandis que l'injecteur principal est alimenté en carburant uniquement à haut régime.

Par ailleurs, du carburant est fourni aux systèmes d'injection secondaires 72, en l'occurrence aux nez d'injection de carburant secondaires 78 dans le mode de réalisation illustré, lorsque la turbomachine fonctionne à un régime inférieur ou égal au régime prédéterminé, en l'occurrence au régime de ralenti. Ainsi, les systèmes d'injection de carburant secondaires 72 injectent le flux additionnel d'air et de carburant directement dans les zones de recirculation de coin 64 respectives des nappes du mélange air/carburant respectivement délivrées par les systèmes d'injection principaux 42.

En revanche, la fourniture de carburant aux systèmes d'injection secondaires 72 est de préférence interrompue lorsque la turbomachine fonctionne à un régime supérieur au régime de ralenti.

La turbomachine est de préférence configurée de sorte que les systèmes d'injection principaux 42 injectent entre 10% et 30% (inclus) du début d'air total circulant dans la chambre de combustion (le reste étant fourni à la chambre par des orifices formés dans les deux parois annulaires coaxiales 32 et 34, et par les systèmes d'injection secondaires 72).

De plus, la turbomachine est de préférence configurée de sorte que le ratio de débit de carburant sur le débit d'air (« FAR », ou « Fuel-Air Ratio ») en provenance des systèmes d'injection principaux 42 est compris entre 5 et 50 millièmes (inclus), ce ratio pouvant varier en fonctionnement.

La turbomachine est de préférence configurée de sorte que les systèmes d'injection secondaires 72 injectent entre 1% et 5% (inclus) du début d'air total circulant dans la chambre de combustion, avec un ratio FAR compris entre 0 et 10 millièmes.

Le nombre de dispositifs d'injection secondaires 76 par système d'injection secondaire 72, ainsi que leur agencement par rapport au système d'injection principal 42 correspondant, peuvent bien entendu différer de la description qui précède sans sortir du cadre de l'invention.

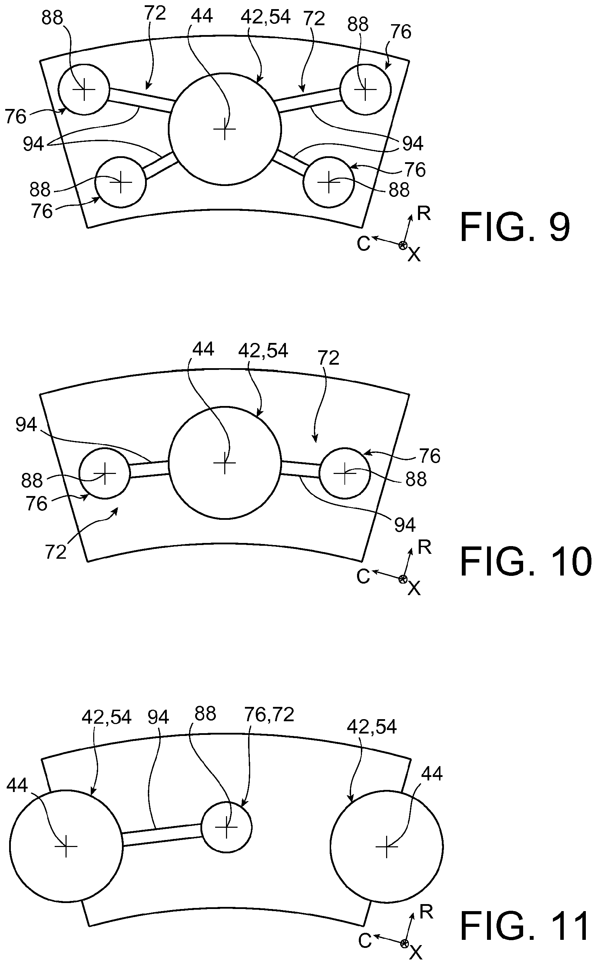

Les figures 9-11 illustrent ainsi, à titre d'exemples, trois autres configurations possibles.

La figure 9 correspond à une configuration avec quatre dispositifs d'injection secondaires 76 par système d'injection secondaire 72, les dispositifs 76 étant agencés respectivement aux sommets d'un trapèze centré par rapport au système d'injection principal 42 correspondant.

La figure 10 correspond à une configuration avec deux dispositifs d'injection secondaires 76 par système d'injection secondaire 72, les dispositifs d'injection secondaires 76 étant agencés circonférentiellement de part et d'autre du système d'injection principal 42 correspondant.

Enfin, la figure 11 correspond à une configuration avec un seul dispositif d'injection secondaire 76 par système d'injection secondaire 72.

D'une manière générale, l'injection du flux additionnel d'air et de carburant dans les zones de recirculation de coin 64 au moyen des systèmes d'injection secondaires 72 permet d'améliorer la carburation dans ces zones, et donc d'abaisser la limite d'extinction de la chambre de combustion et de faciliter le rallumage en vol de la chambre de combustion.

L'invention permet également d'améliorer l'homogénéité de la zone de combustion dans le volume intérieur de la chambre de combustion, et donc de réduire les émissions de composés polluants, en particulier le monoxyde de carbone.

Dans les modes de réalisation préférés de l'invention, le caractère tourbillonnant de l'écoulement issu des ensembles annulaires 80 d'orifices d'entrée d'air permet une carburation optimale dans les zones de recirculation de coin 64.

L'admission d'air au moyen des ensembles annulaires 80 d'orifices d'entrée d'air, formés au sein de la structure annulaire de fond de chambre 40, respectivement autour des nez d'injection de carburant secondaires 78, permet que les dispositifs d'injection secondaires 76 soient relativement compacts et s'intègrent ainsi de manière satisfaisante entre deux systèmes d'injection principaux 42 consécutifs.

## Revendications

1. Chambre de combustion (68) pour turbomachine d'aéronef, comprenant :
- une structure annulaire de fond de chambre (40), et deux parois annulaires coaxiales (32, 34) reliées entre elles par la structure annulaire de fond de chambre et centrées par rapport à un axe longitudinal (28) de la chambre de combustion, de sorte que la structure annulaire de fond de chambre (40) et les deux parois annulaires coaxiales (32, 34) délimitent un volume intérieur (V) de la chambre de combustion ;
- des passages principaux (41) formés au travers de la structure annulaire de fond de chambre (40) ;
- une rangée annulaire de systèmes d'injection principaux (42) montés respectivement dans les passages principaux (41), chaque système d'injection principal (42) comprenant un nez d'injection de carburant principal (54) respectif définissant un axe d'injection (44) respectif, et au moins une vrille d'entrée d'air (56, 58) respective, pour délivrer, dans le volume intérieur (V) de la chambre de combustion, une nappe respective d'un mélange air/carburant, centrée sur l'axe d'injection (44) respectif et comprenant une zone de recirculation centrale (62) respective, et une zone de recirculation de coin (64) respective s'étendant annulairement autour de la zone de recirculation centrale (62) respective ;
- des systèmes d'injection secondaires (72) configurés chacun pour injecter un flux additionnel d'air et de carburant directement dans la zone de recirculation de coin (64) respective de la nappe du mélange air-carburant délivrée par un système d'injection principal correspondant, chaque système d'injection secondaire (72) comprenant au moins un dispositif d'injection secondaire (76) configuré pour fournir une partie au moins du carburant du flux additionnel d'air et de carburant correspondant et une partie au moins de l'air du flux additionnel d'air et de carburant correspondant, au travers d'une région d'injection secondaire correspondante de la structure annulaire de fond de chambre (40) séparée du passage principal (41) au travers duquel est monté le système d'injection principal (42) correspondant ;
chaque dispositif d'injection secondaire (76) comportant un nez d'injection de carburant secondaire (78) respectif, monté dans un passage secondaire (70) correspondant formé au travers de la région d'injection secondaire correspondante, dans la structure annulaire de fond de chambre (40), pour fournir ladite partie au moins du carburant du flux additionnel d'air et de carburant correspondant, **caractérisé en ce que** chaque dispositif d'injection secondaire (76) comprend également un ensemble annulaire (80) respectif d'orifices d'entrée d'air (82) formés dans la région d'injection secondaire correspondante dans la structure annulaire de fond de chambre (40), répartis autour dudit passage secondaire (70) correspondant, et débouchant dans le volume intérieur (V) de la chambre de combustion, de manière à fournir ladite partie au moins de l'air du flux additionnel d'air et de carburant correspondant.

2. Chambre de combustion selon la revendication 1, dans laquelle chaque dispositif d'injection secondaire (76) comporte en outre une surface annulaire divergente (84) respective, formée dans la structure annulaire de fond de chambre (40) de manière à délimiter une sortie du passage secondaire (70) correspondant, et présentant une forme divergente en direction du volume intérieur (V) de la chambre de combustion.

3. Chambre de combustion selon la revendication 2, dans laquelle l'ensemble annulaire (80) respectif d'orifices d'entrée d'air (82) de chaque dispositif d'injection secondaire (76) comporte des premiers orifices d'entrée d'air (82A) formés dans la surface annulaire divergente (84) respective du dispositif d'injection secondaire.

4. Chambre de combustion selon la revendication 2 ou 3, dans laquelle l'ensemble annulaire (80) respectif d'orifices d'entrée d'air (82) de chaque dispositif d'injection secondaire (76) comporte des seconds orifices d'entrée d'air (82B) agencés autour de la surface annulaire divergente (84) respective du dispositif d'injection secondaire.

5. Chambre de combustion selon l'une quelconque des revendications 1 à 4, dans laquelle l'ensemble annulaire (80) d'orifices d'entrée d'air (82) de chaque dispositif d'injection secondaire (76) est configuré pour conférer un caractère tourbillonnant à l'air passant au travers dudit ensemble annulaire d'orifices d'entrée d'air.

6. Chambre de combustion selon l'une quelconque des revendications 1 à 5, dans laquelle :
- la structure annulaire de fond de chambre (40) comporte une paroi annulaire de fond de chambre (40A) agencée d'un côté extérieur de la chambre de combustion et reliant l'une à l'autre les deux parois annulaires coaxiales (32, 34), et un bouclier annulaire (40B) agencé d'un côté intérieur de la chambre de combustion en regard de la paroi annulaire de fond de chambre (40A),
- chaque passage secondaire (70) est formé d'un orifice secondaire (70B) respectif formé dans le bouclier annulaire (40B), et d'une ouverture secondaire (70A) respective formée dans la paroi annulaire de fond de chambre (40A), en regard de l'orifice secondaire (70B) respectif, et
- l'ensemble annulaire (80) respectif d'orifices d'entrée d'air (82) de chaque dispositif d'injection secondaire (76) est formé dans le bouclier annulaire (40B), autour de l'orifice secondaire (70B) respectif du dispositif d'injection secondaire.

7. Turbomachine, **caractérisée en ce qu'**elle comprend une chambre de combustion (68) selon l'une quelconque des revendications 1 à 6, et un système secondaire d'alimentation en carburant configuré pour alimenter les systèmes d'injection secondaires (72) en carburant lorsque la turbomachine fonctionne à un régime de fonctionnement inférieur ou égal à un régime prédéterminé, et pour stopper l'alimentation en carburant des systèmes d'injection secondaires (72) lorsque la turbomachine fonctionne à un régime de fonctionnement supérieur au régime prédéterminé.

8. Turbomachine selon la revendication 7, dans laquelle le régime prédéterminé est le régime de ralenti.

9. Turbomachine selon la revendication 7 ou 8, comprenant en outre un système principal d'alimentation en carburant comprenant des cannes principales (90) à l'extrémité desquelles sont respectivement agencés les nez d'injection de carburant principaux (54) respectifs des systèmes d'injection principaux (42), et dans laquelle le système secondaire d'alimentation en carburant comprend des cannes secondaires (94) à l'extrémité desquelles sont respectivement raccordés les dispositif d'injection secondaire (76), les cannes secondaires (94) étant raccordées chacune à une canne principale (90) correspondante.

10. Turbomachine selon la revendication 9, dans laquelle chaque canne secondaire (94) comporte une portion proximale s'étendant transversalement à l'axe d'injection (44) défini par le nez d'injection de carburant principal (54) correspondant.

11. Procédé d'alimentation en carburant d'une chambre de combustion (68) selon l'une quelconque des revendications 1 à 6 dans une turbomachine, **caractérisé en ce qu'**il comprend la fourniture de carburant aux systèmes d'injection secondaires (72) lorsque la turbomachine fonctionne à un régime inférieur ou égal à un régime prédéterminé, de sorte que les systèmes d'injection secondaires (72) injectent le flux additionnel d'air et de carburant directement dans les zones de recirculation de coin (64) respectives des nappes du mélange air/carburant respectivement délivrées par les systèmes d'injection principaux (42) de la chambre de combustion.

12. Procédé selon la revendication 11, comprenant en outre l'arrêt de la fourniture de carburant aux systèmes d'injection secondaires (72) lorsque la turbomachine fonctionne à un régime supérieur au régime prédéterminé.

## Patentansprüche

1. Brennkammer (68) für ein Turbotriebwerk eines Luftfahrzeugs, umfassend:
- eine ringförmige Kammerbodenstruktur (40), und zwei koaxiale ringförmige Wände (32, 34), die durch die ringförmige Kammerbodenstruktur miteinander verbunden sind, und in Bezug auf eine Längsachse (28) der Brennkammer zentriert sind, sodass die ringförmige Kammerbodenstruktur (40) und die beiden koaxialen ringförmigen Wände (32, 34) ein Innenvolumen (V) der Brennkammer begrenzen,
- Hauptdurchlässe (41), die durch die ringförmige Kammerbodenstruktur (40) hindurch gebildet sind;
- eine ringförmige Reihe an Haupteinspritzsystemen (42), die jeweils in den Hauptdurchlässen (41) montiert sind, wobei jedes Haupteinspritzsystem (42) eine jeweilige Treibstoff-Haupteinspritzspitze (54) umfasst, die eine jeweilige Einspritzachse (44) definiert, und mindestens eine jeweilige Lufteintrittsschraube (56, 58), um in dem Innenvolumen (V) der Brennkammer einen jeweiligen Strahl eines Luft-/Kraftstoffgemisches abzugeben, der auf der jeweiligen Einspritzachse (44) zentriert ist, und einen jeweiligen zentralen Umwälzbereich (62), und einen jeweiligen Eckenumwälzbereich (64) umfasst, der sich ringförmig um den jeweiligen zentralen Umwälzbereich (62) herum erstreckt;
- Sekundäreinspritzsysteme (72), die jeweils konfiguriert sind, um einen zusätzlichen Luft- und Kraftstofffluss direkt in den jeweiligen Eckenumwälzbereich (64) des Strahls des Luft-Kraftstoffgemisches einzuspritzen, der von einem entsprechenden Haupteinspritzsystem abgegeben wird, wobei jedes Sekundäreinspritzsystem (72) mindestens eine Sekundäreinspritzvorrichtung (76) umfasst, die konfiguriert ist, um mindestens einen Teil des Kraftstoffs des entsprechenden zusätzlichen Luft- und Kraftstoffflusses und mindestens einen Teil der Luft des entsprechenden zusätzlichen Luft- und Kraftstoffflusses durch einen entsprechenden Sekundäreinspritzbereich der ringförmigen Kammerbodenstruktur (40) hindurch bereitzustellen, der von dem Hauptdurchlass (41), durch den hindurch das entsprechende Haupteinspritzsystem (42) montiert ist, getrennt ist;
wobei jede Sekundäreinspritzvorrichtung (76) eine jeweilige Kraftstoff-Sekundäreinspritzspitze (78) beinhaltet, die in einem entsprechenden Sekundärdurchlass (70) montiert ist, der durch den entsprechenden Sekundäreinspritzbereich hindurch in der ringförmigen Kammerbodenstruktur (40) gebildet ist, um mindestens den Teil des Kraftstoffs des entsprechenden zusätzlichen Luft- und Kraftstoffflusses bereitzustellen,
**dadurch gekennzeichnet, dass** jede Sekundäreinspritzvorrichtung (76) auch eine jeweilige ringförmige Einheit (80) an Lufteintrittsöffnungen (82) umfasst, die in dem entsprechenden Sekundäreinspritzbereich in der ringförmigen Kammerbodenstruktur (40) gebildet sind, um den entsprechenden Sekundärdurchlass (70) herum verteilt sind, und in das Innenvolumen (V) der Brennkammer münden, um mindestens den Teil der Luft des entsprechenden zusätzlichen Luft- und Kraftstoffflusses bereitzustellen.

2. Brennkammer nach Anspruch 1, wobei jede Sekundäreinspritzvorrichtung (76) weiter eine jeweilige auseinanderlaufende ringförmige Oberfläche (84) beinhaltet, die in der ringförmigen Kammerbodenstruktur (40) derart gebildet wird, um einen Ausgang des entsprechenden Sekundärdurchlasses (70) zu begrenzen, und eine auseinanderlaufende Form in Richtung des Innenvolumens (V) der Brennkammer aufweist.

3. Brennkammer nach Anspruch 2, wobei die jeweilige ringförmige Einheit (80) an Lufteintrittsöffnungen (82) einer jeden Sekundäreinspritzvorrichtung (76) erste Lufteintrittsöffnungen (82A) beinhaltet, die in der auseinanderlaufenden ringförmigen Oberfläche (84) der Sekundäreinspritzvorrichtung gebildet sind.

4. Brennkammer nach Anspruch 2 oder 3, wobei die jeweilige ringförmige Einheit (80) an Lufteintrittsöffnungen (82) einer jeden Sekundäreinspritzvorrichtung (76) zweite Lufteintrittsöffnungen (82B) beinhaltet, die um die jeweilige auseinanderlaufende ringförmige Oberfläche (84) der Sekundäreinspritzvorrichtung herum gebildet sind.

5. Brennkammer nach einem der Ansprüche 1 bis 4, wobei die ringförmige Einheit (80) an Lufteintrittsöffnungen (82) einer jeden Sekundäreinspritzvorrichtung (76) konfiguriert ist, um der durch die ringförmige Einheit an Lufteintrittsöffnungen verlaufenden Luft eine wirbelnde Beschaffenheit zu verleihen.

6. Brennkammer nach einem der Ansprüche 1 bis 5, wobei:
- die ringförmige Kammerbodenstruktur (40) eine ringförmige Kammerbodenwand (40A) beinhaltet, die an einer Außenseite der Brennkammer angeordnet ist, und die beiden koaxialen ringförmigen Wände (32, 34) miteinander verbindet, und eine ringförmige Abschirmung (40B), die an einer Innenseite der Brennkammer gegenüber der ringförmigen Kammerbodenwand (40A) angeordnet ist,
- jeder Sekundärdurchlass (70) aus einer jeweiligen Sekundäröffnung (70B) gebildet ist, die in der ringförmigen Abschirmung (40B) gebildet ist, und aus einer jeweiligen Sekundärbohrung (70A), die in der ringförmigen Kammerbodenwand (40A) gegenüber der jeweiligen Sekundäröffnung (70B) gebildet ist, und
- die jeweilige ringförmige Einheit (80) an Lufteintrittsöffnungen (82) einer jeden Sekundäreinspritzvorrichtung (76) in der ringförmigen Abschirmung (40B) um die jeweilige Sekundäröffnung (70B) der Sekundäreinspritzvorrichtung herum gebildet ist.

7. Turbotriebwerk, **dadurch gekennzeichnet, dass** es eine Brennkammer (68) nach einem der Ansprüche 1 bis 6, und ein Kraftstoff-Sekundärversorgungssystem umfasst, das konfiguriert ist, um die Sekundäreinspritzsysteme (72) mit Kraftstoff zu versorgen, wenn das Turbotriebwerk mit einer Betriebsdrehzahl arbeitet, die geringer oder gleich einer vorbestimmten Drehzahl ist, und um die Versorgung der Sekundäreinspritzsysteme (72) mit Kraftstoff anzuhalten, wenn das Turbotriebwerk mit einer Betriebsdrehzahl arbeitet, die höher als die vorbestimmte Drehzahl ist.

8. Turbotriebwerk nach Anspruch 7, wobei die vorbestimmte Drehzahl die Leerlaufdrehzahl ist.

9. Turbotriebwerk nach Anspruch 7 oder 8, weiter ein Hauptversorgungssystem für Kraftstoff umfassend, das Hauptrohre (90) umfasst, an deren Enden jeweils die jeweiligen Treibstoff-Haupteinspritzspitzen (54) der Haupteinspritzsysteme (42) angeordnet sind, und wobei das Sekundärversorgungssystem für Kraftstoff Sekundärrohre (94) umfasst, an deren Enden jeweils die Sekundäreinspritzvorrichtungen (76) angeschlossen sind, wobei die Sekundärrohre (94) jeweils an ein entsprechendes Hauptrohr (90) angeschlossen sind.

10. Turbotriebwerk nach Anspruch 9, wobei jedes Sekundärrohr (94) einen proximalen Abschnitt beinhaltet, der sich quer zur Einspritzachse (44) erstreckt, die durch die entsprechende Treibstoff-Haupteinspritzspitze (54) definiert wird.

11. Verfahren zur Kraftstoffversorgung einer Brennkammer (68) nach einem der Ansprüche 1 bis 6 in einem Turbotriebwerk, **dadurch gekennzeichnet, dass** es das Bereitstellen von Kraftstoff für die Sekundäreinspritzsysteme (72) umfasst, wenn das Turbotriebwerk auf einer Drehzahl arbeitet, die geringer oder gleich einer vorbestimmten Drehzahl ist, sodass die Sekundäreinspritzsysteme (72) den zusätzlichen Luft- und Kraftstofffluss direkt in die jeweiligen Eckenumwälzbereiche (64) der Strahlen des Luft-/Kraftstoffgemisches, die jeweils durch die Haupteinspritzsysteme (42) der Brennkammer abgegeben werden.

12. Verfahren nach Anspruch 11, weiterdas Anhalten des Bereitstellens von Kraftstoff für die Sekundäreinspritzsysteme (72) umfassend, wenn das Turbotriebwerk auf einer Drehzahl höher als die vorbestimmte Drehzahl arbeitet.

## Claims

1. Combustion chamber (68) for an aircraft turbine engine, comprising:
- an annular chamber-end structure (40), and two coaxial annular walls (32, 34) connected together by the annular chamber-end structure and centred with respect to a longitudinal axis (28) of the combustion chamber, so that the annular chamber-end structure (40) and the two coaxial annular walls (32, 34) delimit an interior volume (V) of the combustion chamber;
- main passages (41) formed through the annular chamber-end structure (40);
- an annular row of main injection systems (42) mounted respectively in the main passages (41), each main injection system (42) comprising a respective main fuel-injection nozzle (54) defining a respective injection axis (44), and at least one respective air-inlet swirler (56, 58), for delivering, in the interior volume (V) of the combustion chamber, a respective sheet of an air/fuel mixture, centred on the respective injection axis (44) and comprising a respective central recirculation region (62), and a respective corner recirculating region (64) extending annularly around the respective central recirculation region (62);
- secondary injection systems (72) each configured for injecting an additional flow of air and fuel directly into the respective corner recirculation region (64) of the sheet of air-fuel mixture delivered by a corresponding main injection system, each secondary injection system (72) comprising at least one secondary injection device (76) configured for supplying at least part of the fuel of the corresponding additional flow of air and fuel and at least part of the air of the corresponding additional flow of air and fuel, through a corresponding secondary injection region of the annular chamber-end structure (40) separated from the main passage (41) through which the corresponding main injection system (42) is mounted,
wherein each secondary injection device (76) includes a respective secondary fuel-injection nozzle (78), mounted in a corresponding secondary passage (70) formed through the corresponding secondary injection region, in the annular chamber-end structure (40), to supply said at least part of the fuel of the corresponding additional flow of air and fuel, **characterized in that** each secondary injection device (76) further includes a respective annular set (80) of air-inlet orifices (82) formed in the corresponding secondary injection region in the annular chamber-end structure (40), distributed around said corresponding secondary passage (70), and emerging in the interior volume (V) of the combustion chamber, so as to supply said at least part of the air of the corresponding additional flow of air and fuel.

2. Combustion chamber according to claim 1, wherein each secondary injection device (76) further includes a respective divergent annular surface (84), formed in the annular chamber-end structure (40) so as to delimit an outlet of the corresponding secondary passage (70), and having a form divergent in the direction of the interior volume (V) of the combustion chamber.

3. Combustion chamber according to claim 2, wherein the respective annular set (80) of air-inlet orifices (82) of each secondary injection device (76) includes first air-inlet orifices (82A) formed in the respective divergent annular surface (84) of the secondary injection device.

4. Combustion chamber according to claim 2 or 3, wherein the respective annular set (80) of air-inlet orifices (82) of each secondary injection device (76) includes second air-inlet orifices (82B) arranged around the respective divergent annular surface (84) of the secondary injection device.

5. Combustion chamber according to any one of claims 1 to 4, wherein the annular set (80) of air-inlet orifices (82) of each secondary injection device (76) is configured for conferring a swirling character on the air passing through said annular set of air-inlet orifices.

6. Combustion chamber according to any one of claims 1 to 5, wherein:
- the annular chamber-end structure (40) includes an annular chamber-end wall (40A) arranged on an external side of the combustion chamber and connecting the two coaxial annular walls (32, 34) to each other, and an annular shield (40B) arranged on an interior side of the combustion chamber opposite the annular chamber-end wall (40A),
- each secondary passage (70) is formed by a respective secondary orifice (70B) formed in the annular shield (40B), and a respective secondary opening (70A) formed in the annular chamber-end wall (40A), opposite the respective secondary orifice (70B), and
- the respective annular set (80) of air inlet orifices (82) of each secondary injection device (76) is formed in the annular shield (40B), around the respective secondary orifice (70B) of the secondary injection device.

7. Turbine engine, **characterised in that** it comprises a combustion chamber (68) according to any one of claims 1 to 6, and a secondary fuel-supply system configured for supplying the secondary injection systems (72) with fuel when the turbine engine is operating at an operating speed below or equal to a predetermined speed, and for stopping the supply of fuel to the secondary injection systems (72) when the turbine engine is operating at an operating speed higher than the predetermined speed.

8. Turbine engine according to claim 7, wherein the predetermined speed is the idle speed.

9. Turbine engine according to claim 7 or 8, further comprising a main fuel-supply system comprising main tubes (90) at the end of which the respective main fuel-injection nozzle (54) of the main injection system (42) are respectively arranged, and wherein the secondary fuel-supply system comprises secondary tubes (94) at the end of which the secondary injection devices (76) are respectively connected, the secondary tubes (94) each being connected to a corresponding main tube (90).

10. Turbine engine according to claim 9, wherein each secondary tube (94) includes a proximal portion extending transversely to the injection axis (44) defined by the corresponding main fuel-injection nozzle (54).

11. Method for supplying fuel to a combustion chamber (68) according to any one of claims 1 to 6 in a turbine engine, **characterised in that** it comprises supplying fuel to the secondary injection systems (72) when the turbine engine is operating at a speed below or equal to a predetermined speed, so that the secondary injection systems (72) inject the additional flow of air and fuel directly into the respective corner recirculation regions (64) of the sheets of the respective air/fuel mixture delivered by the main injection systems (42) of the combustion chamber.

12. Method according to claim 11, further comprising stopping the supply of fuel to the secondary injection systems (72) when the turbine engine is operating at a speed above the predetermined speed.
